# EUROPEAN PATENT SPECIFICATION

(11) **EP 2 592 288 B1**
(45) Date of publication and mention of the grant of the patent: **23.01.2019**
(21) Application number: 11803440.4
(22) Date of filing: 20.06.2011
(51) Int. Cl.: F16C 11/06

(54) **BALL JOINT AND METHOD FOR PRODUCING BALL JOINT**
KUGELGELENK UND VERFAHREN ZUR HERSTELLUNG EINES KUGELGELENKS
ARTICULATION À ROTULE, ET PROCÉDÉ DE PRODUCTION D'ARTICULATION À ROTULE

(30) Priority: 06.07.2010 JP 2010154231
(43) Date of publication of application: 15.05.2013
(73) Proprietor: NHK Spring Co., Ltd., Yokohama-shi, Kanagawa 236-0004 (JP)
(72) Inventor: KURODA, Shigeru, Kanagawa 236-0004 (JP); OHMURA, Shuji, Kanagawa 236-0004 (JP)
(74) Representative: Zech, Stefan Markus
(86) International application number: PCT/JP2011/064059
(87) International publication number: WO 2012/005104

(56) References cited:
- WO-A1-2006/019145
- WO-A1-2006/019145
- JP-A- 2002 510 022
- US-A- 1 880 657
- US-A- 1 909 430
- US-A- 3 108 830
- US-A- 6 082 923

## Description

### Technical Field

The preset invention relates to a ball joint for use in movable portions of various machines and the like and a method for manufacturing the ball joint, and in particular, to a technique for reliably positioning a ball seat vertically and radially with respect to a housing.

### Background Art

A ball joint comprises a housing, a ball stud with a ball portion, a ball seat accommodated in the housing, and a dust cover. A recessed spherical surface is formed within the ball seat so that the ball portion is rotatably fitted into the recessed spherical surface. The ball seat includes a projecting portion formed thereon to inhibit the ball portion from being dislodged from the recessed spherical surface. The inner diameter of the projecting portion is smaller than the outer diameter of the ball portion. Thus, when the ball portion is inserted into the recessed spherical surface, an axial load is applied to the ball stud so that the ball portion forcibly spreads the projecting portion, while the ball portion is inserted into the recessed spherical surface.

A ball joint disclosed in Japanese Patent No. 3,168,229 includes means for fixing a ball seat to a housing as follows. A projection is formed on a bottom portion of a ball seat comprising a thermoplastic resin, and a hole is formed in a bottom portion of the housing. The projection is inserted into the hole, and a tip portion of the projection is heated and deformed (heat caulking) to fix the ball seat to the housing.

US 1 909 430 A relates to a connecting unit for shock absorbers.

US 1 880 657 A relates to a shock absorber link having self lubricating ball and socket joints.

US 3 108 830 A relates to a ball joint construction and method of assembly therefor.

US 6 082 923 A relates to a converging sphere joint assembly.

WO 2006/019145 A1 relates to a ball joint comprising a ball seat made of synthetic resin and corresponding to the preamble of claims 1 and 2.

### Disclosure of Invention

The ball joint and the method for manufacturing the ball joint described above pose the following problems. Since the projection provided on a part of the ball seat is projected through the hole in the bottom portion of the housing and fixed by heat caulking, when for example, an object such as a flying stone impacts the bottom portion of the housing or the bottom portion is subjected to a corrosive liquid such as a strong acid, the projection, made of a synthetic resin, may be damaged to loosen the fixation of the ball seat. Furthermore, since the projection projects from the bottom portion of the housing, disadvantageously the housing has a large axial size and fixing a rod member (tie rod or the like) to the bottom portion of the housing is difficult.

On the other hand, the ball seat is formed of the resin material and thus disadvantageously has low rigidity and has difficulty being positioned when fixed in the housing. When the ball seat fails to be accurately positioned in the housing, the center of oscillation of the ball portion is displaced from a predetermined position, thus precluding intended performance from being demonstrated.

Thus, an object of the present invention is to provide a ball joint which reliably prevents the ball seat from being dislodged from the housing and which allows the ball seat to be reliably positioned vertically and radially with respect to the housing, as well as a method for manufacturing the ball joint.
(1) A ball joint according to the present invention characterized by comprising a metal housing with an opening and a cylindrical peripheral wall portion; a ball stud with a shaft portion and a ball portion; a ball seat formed of a synthetic resin and accommodated in the housing, the ball seat comprising a recessed spherical surface into which the ball portion is inserted, a projecting portion having an inner diameter smaller than an outer diameter of the ball portion so as to inhibit the ball portion from being dislodged from the recessed spherical surface, and a slope portion formed at a hole portion through which the shaft portion is inserted, wherein the slope portion guides the ball portion when the ball portion is inserted into the recessed spherical surface, the slope portion being shaped to have an inner diameter increasing from the projecting portion toward the opening; and a caulking portion comprising a projecting edge formed integrally at an end wall of the opening in the housing and folded toward an end surface of the ball seat, the caulking portion being arranged so as to overlap the end surface of the ball seat and the projecting edge extending along the slope portion toward the projecting portion, wherein the thickness t of the projecting edge is set equal to 40 to 60% of the thickness of the peripheral wall portion and the length of the projecting edge is set twice to four times as great as the thickness.
(2) A method for manufacturing a ball joint, the method characterized by comprising a step of inserting a ball portion of a ball stud into a recessed spherical surface of a ball seat formed of a synthetic resin; a step of inserting the ball seat with the ball placed therein into a metal housing; a first caulking step of placing a radial load acting toward a shaft portion of the ball stud, on a projecting edge formed integrally at an end wall of an opening in the housing to plastically deform the projecting edge in such a manner that the projecting edge is tilted obliquely inward; and a second caulking step of placing, on the projecting edge, a load acting along a slope portion formed at a hole portion formed in the ball seat and through which the shaft portion is inserted, the slope portion being shaped to have an inner diameter increasing from a projecting portion of the ball seat toward the opening, the placing of the load plastically deforming the projecting edge so as to sandwich an end surface of the ball seat between the projecting edge and the housing, wherein the projecting edge extends along the slope portion toward the projecting portion, the thickness t of the projecting edge is set equal to 40 to 60% of the thickness of the peripheral wall portion and the length of the projecting edge is set twice to four times as great as the thickness.

### Brief Description of Drawings

FIG. 1 is a cross-sectional view showing a ball joint according to a first embodiment of the present invention.
**FIG. 2** is a diagram showing a part of a process of manufacturing the ball joint.
**FIG. 3** is a diagram showing the relationship between a projecting edge and a reduced diameter portion of the ball joint.

Best Mode for Carrying Out the Invention Embodiments of the present invention will be described below with reference to the attached drawings.

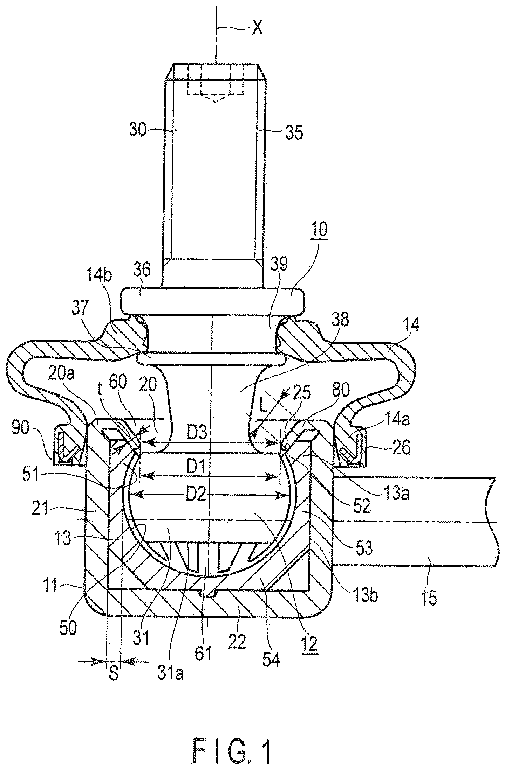

**FIG. 1** shows a ball joint 10 according to an embodiment of the present invention. The application of the ball joint 10 is not limited, and the ball joint 10 is used, by way of example, for a stabilizer link that couples a chassis of a car to a stabilizer forming a suspension mechanism portion of the car.

The ball joint 1 comprises a housing 11, a ball stud 12, a ball seat 13, and a dust cover 14. A rod member 15 is welded to the housing 11.

The housing 11 is formed of metal such as carbon steel and includes an opening 20 positioned above in **FIG. 1**, a cylindrical peripheral wall portion 21, and a bottom portion 22 positioned opposite the opening 20. A projecting edge 25 is formed on an end wall 20a of the opening 20; the projecting edge 25 has a thickness t and a length L and forms a caulking portion 80 described below. The thickness t of the projecting edge 25 is set equal to 40 to 60% of the thickness of the peripheral wall portion 21. A thickness t smaller than 40% of the thickness of peripheral wall portion 21 results in an insufficient load after deformation, thus precluding the projecting edge 25 from accurately holding an end surface 13a of the ball seat 13. On the other hand, a thickness t greater than 60% of the thickness of peripheral wall portion 21 results in difficult caulking. Furthermore, the length L of the projecting edge 25 is set twice to four times as great as the thickness t. A length L less than twice as great as the thickness t results in an increased caulking force required for caulking and an insufficient margin for holding the projecting edge 25 on the ball seat 13. On the other hand, a length L more than four times as great as the thickness t results in difficult pressing.

A dust cover mounting groove 26 is formed on an outer surface of the peripheral wall portion 21 near the opening 20. The dust cover mounting groove 26 is circumferentially continuous along the peripheral wall portion 21.

The ball stud is formed of metal and includes a shaft portion 30 and a ball portion 31. The shaft portion 30 and the ball portion 31 are integrated together. The shaft portion 30 comprises an external thread portion 35, a first flange portion 36, a second flange portion 37, and a reduced diameter portion 38. The first flange portion 36 has a larger diameter portion than the second flange portion 37. A dust cover mounting portion 39 is formed between the flange portions 36 and 37. The dust cover mounting portion 39 is circumferentially continuous along the ball stud. A tip surface 31a of the ball portion 31 is shaped flat.

The ball seat 13 is formed of a synthetic resin and accommodated within the housing 11. The ball seat 13 includes a spherical surface 50 into which the ball portion 31 is inserted, a projecting portion 51 that serves to prevent the ball portion 31 from being dislodged, a slope portion 52 that guides the ball portion 31 when the ball portion 31 is inserted into the recessed spherical surface 50, a sidewall portion 53 formed around the recessed spherical surface 50, and a bottom wall portion 54. The projecting portion 51, the sidewall portion 53, and the bottom wall portion 54 are integrated together.

The ball portion 31 and the recessed spherical surface 50 are rotatably fitted around an axis X of the ball seat 13. Furthermore, the ball portion 31 is fitted on the recessed spherical surface 50 so that the ball stud 12 can be tilted to the axis X of the ball seat 13 and universally pivoted.

The projecting portion 51 has an inner diameter D1 smaller than the outer diameter D2 of the ball portion 31. The projecting portion 51 inhibits the ball portion 31 placed in the recessed spherical surface 50 from being dislodged from the recessed spherical surface 50.

The slope portion 52 is formed on an inner peripheral surface of a hole portion 60 of the ball seat 13 through which the shaft portion 30 of the ball stud 12 is inserted. The slope portion 52 is tapered such that the inner diameter of the slope portion 52 increases from the projecting portion 51 toward the opening 20 in the housing 11. The slope portion 52 continues with the end surface 13a of the ball seat 13.

The bottom wall portion of the ball seat 13 is shaped to form a part of a sphere along an outer peripheral surface of the ball portion 31. The bottom wall portion 54 of the ball seat 13 overlaps the bottom portion 22 of the housing 11. A space portion 61 is formed between the bottom wall portion 54 of the ball seat 13 and the tip surface 31a of the ball portion 31 so that a lubricant such as grease can be accommodated in the space portion 61.

A caulking portion 80 is provided at the opening 20 of the housing 11. The caulking portion 80 is formed by plastically deforming the projecting edge 25 formed integrally with the end wall 20a of the opening 20 in the housing 11. The caulking portion 80 is desirably provided all along the circumference of the housing 11 but may be provided on a part of the housing circumferentially with respect thereto provided that this structure poses no strength problem.

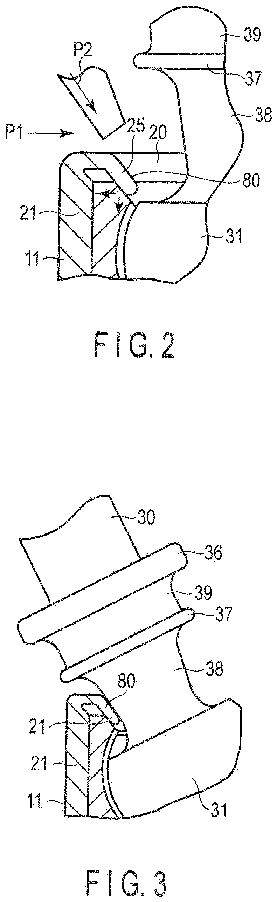

The caulking portion 80 is arranged within the opening 20 in the housing 11 so as to overlap the end surface 13a of the ball seat 13. The projecting edge 25 extends opposite the slope portion 52 of the ball seat 13 and along the slope portion 52 toward the projecting portion 51. The inner diameter D3 of the projecting edge 25 is set so as to prevent the ball stud 12 from interfering with the trajectory of the ball portion 31 when the ball stud 12 oscillates. Furthermore, as shown in **FIG. 3**, the projecting edge 25 is shaped to follow the reduced diameter portion 38 when the ball stud 12 is oscillated through the maximum angle. The interference between the reduced diameter portion 38 and the projecting edge 25 prevents a reduction in the angle of oscillation of the ball stud 12.

To form the caulking portion 80, a load P1 acting radially with respect to the ball seat 13 is placed on the projecting edge 25 during a first caulking step. The radial load P1 plastically deforms the projecting edge 25 so that the projecting edge 25 is tilted obliquely inward at about 45°.

Then, during a second caulking step, a load P2 acting along the slope portion 52 of the ball seat 13 is placed on the projecting edge 25. Load P2 plastically deforms the projecting edge 25 so as to sandwich the end surface 13a of the ball seat 13 between the projecting edge 25 and the peripheral wall portion. The root of the caulking portion 80 is bent through the radius of curvature R, thus preventing the caulking portion 80 from excessively compressing the ball seat 13.

Thus, the caulking portion 80 is formed by, first during the first step, applying the radial load P1 to deform the projecting edge so that the projecting edge is tilted at about 45°, and then during the second step, applying the axial load P2. This avoids placing an excessive caulking load on the ball seat 13.

Moreover, as shown in **FIG. 1**, the caulking portion 80 is formed in an area S between the outer peripheral surface 13a of the ball seat 13 and an extension, in the direction of the axis X, of a position corresponding to the minimum distance between the outer peripheral portion 13b of the ball seat 13 and the recessed spherical surface 50. In the area S, the appropriate thickness of the ball seat 13 is ensured in the direction of the axis X. Thus, even when a caulking load acting in the direction of the axis X is placed on the ball seat 13, the ball seat 13 can sufficiently withstand the caulking load.

As shown in **FIG. 1**, one end 14a of the dust cover 14, formed of rubber, is pressed in the dust cover mounting groove 26 of the housing 11 and fixed to the housing 11. The other end of the dust cover 14 is fitted in the dust cover mounting portion 39 of the ball stud 12.

As shown in **FIG. 3**, when the ball stud 12 is tilted to the axis X of the ball seat 13 by a predetermined amount, the shaft portion 30 of the ball stud 12 comes into abutting contact with the projecting edge 25 to inhibit the ball stud 12 from being further tilted.

The ball joint 10 is manufactured via, for example, steps described below.
(1) The ball portion 31 of the ball stud 12 is inserted into the recessed spherical surface 50 of the ball seat 13.
(2) The ball seat 13 with the ball portion 31 placed therein is inserted into the housing 11.
(3) The radial load P1, acting toward the shaft portion 30, is placed on the projecting edge 25 of the housing 11 to plastically deform the projecting edge 25 so that the projecting edge 25 is tilted obliquely inward. This is a first caulking step.
(4) Load P2, acting along the slope portion 52 of the ball seat 13, is placed on the projecting edge 25 to plastically deform the projecting edge 25 so that the end surface 13a of the ball seat 13 is sandwiched between the projecting edge 25 and the circumferential wall portion. This is a second caulking step.

In the ball joint 10 according to the present embodiment, when a pull-out load acting in the direction of the axis X is placed on the ball stud 12, the projecting portion 51 serves to prevent the ball portion 31 from being dislodged. When a load so excessive as to deform the projecting portion 51 acts in the direction of the axis X, the projecting edge 25 prevents the projecting portion 51 from being deformed.

Furthermore, during the second caulking step, the pressurization is carried out along the slope portion 52. This prevents the ball seat 13 from being subjected an excessive force and thus prevents the ball seat 13 from being excessively compressed.

Moreover, since the projecting edge 25 pressurizes the slope portion 52 of the ball seat 13 all along the circumference thereof, a centripetal effect is exerted to align the axis of the ball seat 13 with the axis X, while pressing the ball seat 13 toward the bottom portion 22 of the housing 11. Thus, the ball seat 13 can be reliably positioned vertically and radially with respect to the housing 11.

Additionally, the ball seat 13 is fixed to the metal housing 11 by caulking the projecting edge 25 formed on the housing 11. The present embodiment can thus increase pull-out strength compared to a conventional technique for fixing the ball seat to the housing by heat caulking.

In addition, no part of the ball seat 13, formed of a synthetic resin, projects out from the bottom portion 22 of the housing 11. Thus, the housing 11 is unlikely to be affected by a flying stone or a corrosive liquid. Moreover, a rod member 16 may be soldered to the bottom portion 22 of the housing 11 at any angle.

The present invention is not limited to the above-described embodiments, and many variations may of course be made to the embodiments without departing from the scope of the appended claims. The invention is defined by the appended claims only.

### Industrial Applicability

The present invention provides a ball joint which reliably prevents the ball seat from being dislodged from the housing and which allows the ball seat to be reliably positioned vertically and radially with respect to the housing, as well as a method for manufacturing the ball joint.

## Claims

1. A ball joint comprising:
a metal housing (11) with an opening (20) and a cylindrical peripheral wall portion (21);
a ball stud (12) with a shaft portion (30) and a ball portion (31);
a ball seat (13) formed of a synthetic resin and accommodated in the housing (11), the ball seat (13) comprising
a recessed spherical surface (50) into which the ball portion (31) is inserted,
a projecting portion (51) having an inner diameter smaller than an outer diameter of the ball portion (31) so as to inhibit the ball portion (31) from being dislodged from the recessed spherical surface, and
a slope portion (52) formed at a hole portion (60) through which the shaft portion (30) is inserted,
wherein the slope portion (52) guides the ball portion (31) when the ball portion (31) is inserted into the recessed spherical surface (50),
the slope portion (52) being shaped to have an inner diameter increasing from the projecting portion (51) toward the opening (20);
and **characterised by**:
a caulking portion (80) comprising a projecting edge (25) formed integrally at an end wall of the opening (20) in the housing (11) and folded toward an end surface (13a) of the ball seat (13),
the caulking portion (80) being arranged so as to overlap the end surface (13a) of the ball seat (13) and the projecting edge (25) extending along the slope portion (52) toward the projecting portion (51),
wherein the thickness t of the projecting edge (25) is set equal to 40 to 60% of the thickness of the peripheral wall portion (21) and
the length (L) of the projecting edge (25) is set twice to four times as great as the thickness (t).

2. A method for manufacturing a ball joint, the method comprising:
a step of inserting a ball portion (31) of a ball stud (12) into a recessed spherical surface (50) of a ball seat (13) formed of a synthetic resin;
a step of inserting the ball seat (13) with the ball placed therein into a metal housing (11);
a first caulking step of placing a radial load acting toward a shaft portion (30) of the ball stud (12), on a projecting edge (25) formed integrally at an end wall of an opening (20) in the housing (11) to plastically deform the projecting edge (25) in such a manner that the projecting edge (25) is tilted obliquely inward;
and **characterised by**:
a second caulking step of placing, on the projecting edge (25), a load acting along a slope portion (52) formed at a hole portion (60) formed in the ball seat (13) and through which the shaft portion (30) is inserted, the slope portion (52) being shaped to have an inner diameter increasing from a projecting portion (51) of the ball seat (13) toward the opening (20),
the placing of the load plastically deforming the projecting edge (25) so as to sandwich an end surface of the ball seat (13) between the projecting edge (25) and the housing (11),
wherein the projecting edge (25) extends along the slope portion (52) toward the projecting portion (51),
the thickness t of the projecting edge (25) is set equal to 40 to 60% of the thickness of the peripheral wall portion (21) and
the length (L) of the projecting edge (25) is set twice to four times as great as the thickness (t).

## Patentansprüche

1. Kugelgelenk, Folgendes aufweisend:
ein Metallgehäuse (11) mit einer Öffnung (20) und einem zylindrischen Umfangswandabschnitt (21);
einen Kugelzapfen (12) mit einem Schaftabschnitt (30) und einem Kugelabschnitt (31);
einen Kugelsitz (13), der aus einem Kunstharz hergestellt und im Gehäuse (11) untergebracht ist, wobei der Kugelsitz (13) aufweist
eine ausgenommene Kugeloberfläche (50), in die der Kugelabschnitt (31) eingesetzt ist,
einen vorspringenden Abschnitt (51) mit einem Innendurchmesser, der kleiner ist als ein Außendurchmesser des Kugelabschnitts (31), um zu verhindern, dass der Kugelabschnitt (31) aus der ausgenommenen Kugeloberfläche entfernt wird, und
einen Neigungsabschnitt (52), der an einem Öffnungsabschnitt (60) ausgebildet ist, durch welchen hindurch der Schaftabschnitt (30) eingesetzt ist,
wobei der Neigungsabschnitt (52) den Kugelabschnitt (31) führt, wenn der Kugelabschnitt (31) in die ausgenommene Kugeloberfläche (50) eingesetzt wird,
wobei der Neigungsabschnitt (52) so geformt ist, dass er einen Innendurchmesser hat, der ausgehend von dem vorspringenden Abschnitt (51) zur Öffnung (20) hin zunimmt;
und **gekennzeichnet durch**:
einen Abdichtungsabschnitt (80), der einen vorstehenden Rand (25) aufweist, der integral an einer Stirnwand der Öffnung (20) in dem Gehäuse (11) ausgebildet und zu einer Endfläche (13a) des Kugelsitzes (13) hin umgeschlagen ist,
wobei der Abdichtungsabschnitt (80) so angeordnet ist, dass er die Endfläche (13a) des Kugelsitzes (13) und den vorstehenden Rand (25) überlagert, der sich entlang des Neigungsabschnitts (52) zum vorspringenden Abschnitt (51) hin erstreckt,
wobei die Dicke t des vorstehenden Rands (25) mit gleich 40 bis 60 % der Dicke des Umfangswandabschnitts (21) angesetzt ist, und
die Länge (L) des vorstehenden Rands (25) zwei- bis viermal so groß wie die Dicke (t) angesetzt ist.

2. Verfahren zum Herstellen eines Kugelgelenks, wobei das Verfahren umfasst:
einen Schritt des Einsetzens eines Kugelabschnitts (31) eines Kugelzapfens (12) in eine ausgenommene Kugeloberfläche (50) eines Kugelsitzes (13), der aus einem Kunstharz hergestellt ist;
einen Schritt des Einsetzens des Kugelsitzes (13) mit der darin eingelegten Kugel in ein Metallgehäuse (11);
einen ersten Abdichtungsschritt des Anbringens einer radialen Last, die zu einem Schaftabschnitt (30) des Kugelzapfens (12) hin wirkt, auf einem vorstehenden Rand (25), der integral an einer Stirnwand einer Öffnung (20) in dem Gehäuse (11) ausgebildet ist, um den vorstehenden Rand (25) derart plastisch zu verformen, dass der vorstehende Rand (25) schräg nach innen geneigt ist;
und **gekennzeichnet durch**:
einen zweiten Abdichtungsschritt des Anbringens, auf dem vorstehenden Rand, (25) einer Last, die entlang eines Neigungsabschnitts (52) wirkt, der an einem Öffnungsabschnitt (60) ausgebildet ist, der in dem Kugelsitz (13) ausgebildet ist, und durch welchen hindurch der Schaftabschnitt (30) eingesetzt ist,
wobei der Neigungsabschnitt (52) so geformt ist, dass er einen Innendurchmesser hat, der ausgehend von einem vorspringenden Abschnitt (51) des Kugelsitzes (13) zur Öffnung (20) hin zunimmt,
wobei das Anbringen der Last den vorstehenden Rand (25) plastisch verformt, um eine Stirnfläche des Kugelsitzes (13) sandwichartig zwischen dem vorstehenden Rand (25) und dem Gehäuse (11) einzuschließen,
wobei sich der vorstehende Rand (25) entlang des Neigungsabschnitts (52) zum vorspringenden Abschnitt (51) hin erstreckt,
wobei die Dicke t des vorstehenden Rands (25) mit gleich 40 bis 60 % der Dicke des Umfangswandabschnitts (21) angesetzt ist, und
die Länge (L) des vorstehenden Rands (25) zwei- bis viermal so groß wie die Dicke (t) angesetzt ist.

## Revendications

1. Articulation à rotule, comprenant :
un boîtier métallique (11) doté d'une ouverture (20) et d'une partie de paroi périphérique cylindrique (21) ;
un pivot à rotule (12) doté d'une partie tige (30) et d'une partie rotule (31) ;
un siège de rotule (13) formé d'une résine synthétique et logé dans le boîtier (11), le siège de rotule (13) comprenant
une surface sphérique renfoncée (50) dans laquelle est introduite la partie rotule (31),
une partie en saillie (51) ayant un diamètre intérieur inférieur à un diamètre extérieur de la partie rotule (31) de façon à empêcher que la partie rotule (31) ne soit délogée de la surface sphérique renfoncée, et
une partie inclinée (52) formée au niveau d'une partie trou (60) à travers laquelle est introduite la partie tige (30),
dans laquelle la partie inclinée (52) guide la partie rotule (31) lors de l'introduction de la partie rotule (31) dans la surface sphérique renfoncée (50),
la partie inclinée (52) étant formée de sorte que son diamètre intérieur aille en augmentant à partir de la partie en saillie (51) en direction de l'ouverture (20) ;
et **caractérisée par** :
une partie à mater (80) comprenant un bord en saillie (25) formé intégralement au niveau d'une paroi d'extrémité de l'ouverture (20) dans le boîtier (11) et pliée en direction d'une surface d'extrémité (13a) du siège de rotule (13),
la partie à mater (80) étant disposée de façon à chevaucher la surface d'extrémité (13a) du siège de rotule (13) et le bord en saillie (25) s'étendant le long de la partie inclinée (52) en direction de la partie en saillie (51),
dans laquelle l'épaisseur (t) du bord en saillie (25) est fixée pour égaler 40 à 60 % de l'épaisseur de la partie de paroi périphérique (21) et la longueur (L) du bord en saillie (25) est fixée pour correspondre à deux à quatre fois l'épaisseur (t).

2. Procédé de fabrication d'une articulation à rotule, le procédé comprenant :
une étape consistant à introduire une partie rotule (31) d'un pivot à rotule (12) dans une surface sphérique renfoncée (50) d'un siège de rotule (13) formé d'une résine synthétique ;
une étape consistant à introduire le siège de rotule (13), dans lequel est introduit la rotule, dans un boîtier métallique (11) ;
une première étape de matage consistant à placer une charge radiale agissant en direction d'une partie tige (30) du pivot à rotule (12), sur un bord en saillie (25) formé intégralement au niveau d'une paroi d'extrémité d'une ouverture (20) dans le boîtier (11) pour déformer plastiquement le bord en saillie (25) pour que le bord en saillie (25) s'incline obliquement vers l'intérieur ;
et **caractérisé par**
une seconde étape de matage consistant à placer, sur le bord en saillie (25), une charge agissant le long de la partie inclinée (52) formée au niveau d'une partie trou (60) ménagée dans le siège de rotule (13) et à travers laquelle est introduite la partie tige (30), la partie inclinée (52) étant formée de sorte que son diamètre intérieur aille en augmentant à partir de la partie en saillie (51) du siège de rotule (13) en direction de l'ouverture (20),
le placement de la charge déformant plastiquement le bord en saillie (25) de façon à prendre en sandwich une surface d'extrémité du siège de rotule (13) entre le bord en saillie (25) et le boîtier (11),
dans lequel le bord en saillie (25) s'étend le long de la partie inclinée (52) en direction de la partie en saillie (51),
l'épaisseur (t) du bord en saillie (25) est fixée pour égaler 40 à 60 % de l'épaisseur de la partie de paroi périphérique (21), et
la longueur (L) du bord en saillie (25) est fixée pour correspondre à deux à quatre fois l'épaisseur (t).
